# FASCICULE DE BREVET EUROPEEN

(11) **EP 0 274 920 B1**
(45) Date de publication et mention de la délivrance du brevet: **26.01.1994**
(21) Numéro de dépôt: 87402544.8
(22) Date de dépôt: 10.11.1987
(51) Int. Cl.: C08L 95/00, E01C 23/06

(54) **Procédé pour régénérer à froid les couches supérieures des chaussées**
Verfahren zur kalten Regenerierung der Fahrbahndeckschichten
Method of cold-regenerating the surface layers of roadways

(30) Priorité: 18.11.1986 FR 8616023
(43) Date de publication de la demande: 20.07.1988
(73) Titulaire: C O L A S Société Anonyme, F-75008 Paris (FR)
(72) Inventeur: Chambard, René, F-75012 Paris (FR); Gaultier, Jacques, F-92000 Chatenay Malabry (FR); Chaignon, François, F-33150 Cenon (FR)
(74) Mandataire: Phélip, Bruno

(56) Documents cités:
- EP-A- 0 182 748
- FR-A- 2 330 733
- US-A- 4 373 961

## Description

La présente invention se rapporte à un procédé pour régénérer à froid les matériaux constituant les couches supérieures des chaussées, en vue de leur réutilisation en couches de base, de réglage ou d'usure des chaussées. Elle concerne également divers liants pour la mise en oeuvre de ce procédé.

En vue de la réfection d'une chaussée, il est préférable d'enlever les couches supérieures de celle-ci pour abaisser et/ou régulariser le niveau de la surface, la préparant ainsi à recevoir un nouveau revêtement. Il est naturellement intéressant de récupérer le matériau constituant de telles couches supérieures, après l'avoir fraisé, et éventuellement, concassé.

Les matériaux fraisés et, éventuellement, concassés, ainsi obtenus, sont constitués par des agrégats de la matière d'assise utilisée qui sont enrobés par le liant vieilli. Ils peuvent être récupérés en vue de subir un certain nombre d'opérations avant d'être à nouveau appliqués sur la chaussée.

Afin de conférer à ces matériaux fraisés les qualités requises pour leur utilisation dans une couche de la chaussée, on a déjà proposé de leur incorporer des produits qui ont pour point commun la fonction de liant, ceux-ci étant choisis parmi les liants couramment utilisés, à savoir les émulsions de bitume, le bitume fluidifié, le ciment, la chaux, les cendres volantes et le laitier granulé.

On peut effectuer une telle opération à froid, comme cela est décrit dans la demande de brevet européen n° 182 748, qui décrit un procédé de fraisage à froid de couches supérieures du revêtement de chaussée, au cours duquel on incorpore au matériau fraisé une composition liquide en quantité prédeterminée, ladite quantité étant calculée pour obtenir, en une opération, un matériau à teneur optimale en liquide de compactage, cette composition liquide pouvant être une composition aqueuse, une composition organique ou une composition organique aqueuse renfermant, par exemple, des liants organiques ou des émulsions de bitume ou de goudron.

On connaît également un autre procédé consistant en une réelle régénération du liant vieilli, applicable dans le cas des liants bitumineux, suivant lequel on incorpore au matériau à régénérer, à chaud, et dans une installation de traitement appropriée, des matières d'apport généralement constituées par des fractions légères hydrocarbonées, de façon à compenser les fractions perdues par évaporation - notamment au cours du vieillissement du matériau - des liants bitumineux qui avaient été utilisés. Un tel traitement, bien qu'efficace, présente les inconvénients, d'une part, d'être coûteux parce qu'il impose le transport des matériaux jusqu'à l'installation de traitement et qu'il nécessite une dépense d'énergie pour le chauffage du matériau, et d'autre part, d'entraîner des pertes de temps non négligeables du fait qu'il n'est pas effectué in situ, et, enfin, parce qu'il ne permet pas de corriger simultanément la composition du liant et son dosage dans le matériau fini.

US-A-4.373.961 décrit un procédé pour recycler le matériau vieilli d'une chaussée, selon lequel on traite in situ et à froid ledit matériau, préalablement prélevé de la chaussée et concassé, par une composition sous forme d'émulsion aqueuse contenant un mélange de deux bitumes. Dans un tel procédé, il n'y a pas de régénération du matériau vieilli, le seul problème posé étant celui de la restauration de la dureté initiale du matériau. Le mélange de bitumes constituant le liant de traitement est spécifiquement choisi pour atteindre ce résultat. Un tel liant ne permet pas de rénover une chaussée en réalisant la régénération du liant vieilli, c'est-à-dire la restauration de la composition physico-chimique dudit liant.

FR-A-2.330.733 a pour objet un procédé de fabrication d'une masse autodurcissable destinée à une mise en oeuvre immédiate, consistant en un mastic pouvant, en particulier, être employé pour le jointoiement. Le problème posé dans ce document antérieur est tout à fait différent de celui de la régénération ou rénovation d'une chaussée vieillie. Le produit de FR-A-2.330.733 est formulé pour être mis en oeuvre en tant que tel, sous forme de masse applicable à la spatule et capable de durcir rapidement. Un tel produit ne peut être comparé à un liant mis en oeuvre dans un procédé de régénération de la couche supérieure d'une chaussée, ledit liant étant formulé pour interagir avec le matériau vieilli afin d'en assurer la régénération. Le produit de FR-A-2.330.733 consiste notamment en une émulsion aqueuse à forte concentration de bitume avec une faible proportion d'un mélange de ciment et d'huile minérale. Tant dans sa composition que dans son mode de mise en oeuvre, un tel produit ne conviendrait pas à la régénération d'une chaussée.

EP-A-191.157 décrit un produit pulvérulent à base de bitume, contenant un mélange spécifique de silice et zéolithe(s) synthétiques. Un tel produit est essentiellement destiné à être coulé, pour servir notamment à la réalisation de revêtements soumis à de fortes contraintes lors de l'utilisation, par exemple de sols industriels. Comme tout produit neuf à base de bitume, il peut aussi être utilisé comme additif lors du recyclage de bitume vieilli. Néanmoins, le document EP-A-191.157 ne décrit pas un procédé de traitement in situ et à froid de la couche supérieure d'une chaussée, pas plus que les moyens de réaliser la régénération du matériau de cette couche. En particulier, on n'y trouve aucun enseignement sur la formulation d'un liant capable d'interagir avec le matériau vieilli, afin de restaurer ses propriétés physico-chimiques.

La présente invention offre la possibilité de rénover des chaussées routières en travaillant in situ et à froid, tout en conservant les avantages du procédé connu fonctionnant à chaud, c'est-à-dire, un procédé suivant lequel on ne se contente pas d'assurer une simple re-liaison des agrégats comme c'était le cas dans le premier procédé évoqué ci-dessus, mais on assure une véritable régénération du liant vieilli. Il va également de soi que le procédé de l'invention peut être mis en oeuvre dans une installation de traitement.

De plus, conformément à l'invention, on réalise, à froid, une réelle continuité entre le liant existant du matériau de la chaussée ancienne et au moins un liant d'apport, par l'intermédiaire d'au moins un agent dit compatibilisant qui est choisi pour pouvoir assurer une liaison physico-chimique entre liant vieilli et liant(s) d'apport, ce(s) dernier(s) constituant l'une des phases d'un liant composite de régénération, qui fait également l'objet de la présente invention, les autres phases étant celle du (ou des) agent(s) compatibilisant(s) et une phase dispersante, qui peut être aqueuse.

Enfin, l'indépendance des phases de régénération et d'ajout permet de formuler et de doser le liant de façon à obtenir une composition du matériau dans une formule prédéterminée.

Ainsi, dans le cas de l'utilisation de liants hydrocarbonés, on peut corriger, à l'aide de fractions entrant dans la constitution du (ou des) liant(s) d'apport et du (ou des) agent(s) compatibilisant(s), les pertes quantitatives et qualitatives subies au cours du vieillissement du matériau. La rhéologie du liant hydrocarboné existant est, selon l'invention, modifiée à froid, ce qui constitue une originalité par rapport aux procédés connus.

En outre, l'invention présente l'avantage complémentaire de permettre l'introduction de liants minéraux apportant un module élevé et une forte résistance à la compression. De tels liants minéraux peuvent avantageusement compléter l'action de liants hydrocarbonés assurant une souplesse d'assise, cette complémentarité étant assurée par une formulation compatibilisant l'action d'un liant hydrocarboné et celle d'un liant minéral au sein d'un même mélange.

La présente invention a donc d'abord pour objet un procédé pour régénérer à froid les matériaux constituant la (ou les) couche(s) supérieure(s) d'une chaussée qui ont été récupérés en vue de leur réutilisation, lesdits matériaux se présentant sous la forme d'agrégats dont certains ou la totalité peuvent être enrobés de liant hydrocarboné vieilli

Le procédé de l'invention est défini dans la revendication 1

On choisit avantageusement la composition du liant composite d'après la nature et l'état des matériaux à régénérer.

Par ailleurs, on peut choisir le (ou les) liant(s) d'apport parmi les liants hydrocarbonés et les liants minéraux.

En outre, on peut calculer la quantité de phase liquide à incorporer au matériau à régénérer, pour obtenir, en une opération, un matériau régénéré à teneur optimale en liquide de compactage. Une telle quantité de phase liquide est calculée en fonction des divers paramètres permettant de définir le matériau fraisé ou concassé : cette quantité sera notamment fonction de la masse de matériau fraisé ou concassé recueilli, de la courbe granulométrique dudit matériau, de l'angularité des grains constituant ledit matériau, et de l'énergie de compactage admise selon la norme SN 670330a (essai Proctor ou similaire).

On peut également, après avoir incorporé le liant composite au matériau à régénérer, réaliser une opération complémentaire de malaxage.

Avantageusement, on travaille in situ en opérant de manière connue en soi le fraisage des couches supérieures de la chaussée, en amenant le liant composite dans la zone de fraisage, et en mélangeant à froid ce liant avec le matériau fraisé à régénérer. Le dosage de la quantité de phase liquide de liant composite nécessaire s'effectue en fonction de la vitesse d'avancement de la machine.

La présente invention a également pour objet un liant composite pour la mise en oeuvre du procédé qui vient d'être défini ci-dessus, un tel liant ayant également été défini ci-dessus.

A titre d'exemple, on propose, selon la présente invention, un liant appliqué à la régénération d'un enrobé bitumineux, caractérisé par le fait qu'il comprend :
- une phase dispersante aqueuse, comportant au moins un agent tensio-actif choisi parmi les agents tensio-actifs ioniques et les agents tensio-actifs non-ioniques ;
- au moins un liant d'apport hydrocarboné choisi parmi les bitumes purs et les bitumes spéciaux, fluxés ou non; et
- au moins un agent compatibilisant hydrocarboné choisi parmi les huiles aromatiques d'origine pétrolière

Comme autre exemple, on propose, selon la présente invention, un liant composite appliqué à la régénération d'une chaussée comportant des matériaux non liés, caractérisé par le fait qu'il comprend une phase dispersante aqueuse, qui comprend, en solution, au moins un agent tensio-actif choisi parmi les agents tensio-actifs non-ioniques et les agents tensio-actifs ioniques et assurant une compatibilité de l'action des liants hydrocarbonés et hydrauliques; et au moins un liant d'apport hydrocarboné choisi parmi les bitumes purs et les bitumes spéciaux, fluxés ou non, et au moins un liant hydraulique.

Les agents tensio-actifs ioniques, que l'on peut ainsi utiliser, sont notamment choisis parmi les sels alcalins des acides résiniques, les sels alcalins de protéines animales, les sels d'ammonium quaternaires et les chlorhydrates de polyamines grasses.

Les agents tensio-actifs non-ioniques, que l'on peut ainsi utiliser, sont notamment choisis parmi les composés polyoxyéthylénés.

La présente invention porte également sur le liant résultant de la combinaison, par mélange à froid, du liant composite tel que défini ci-dessus et du (ou des) liant(s) du matériau traité ayant été régénéré(s) par ledit liant composite.

Pour mieux faire comprendre l'objet de la présente invention, on décrira, dans les exemples qui suivent, des modes de réalisation particuliers de liants composites de régénération selon l'invention, ainsi que leur mise en oeuvre pour la réfection de chaussées. Dans ces exemples les pourcentages sont donnés en poids.

### EXEMPLE 1 : Régénération d'un ancien enrobé bitumineux

Le liant composite de régénération est formulé comme suit :
- 50 à 60% d'un bitume conforme à la norme T 65-001;
- 5 à 15% d'un mélange d'huiles aromatiques d'origine pétrolière;
- 1 à 2% de chlorhydrate de polyamine aliphatique; et,
- 44 à 23% d'eau.

Il est introduit dans une proportion de 1 à 3% du poids du matériau fraisé, le chlorhydrate de polyamine aliphatique étant dissous sous forme ionique dans l'eau qui constitue une phase continue, et chacun des deux autres constituants, à savoir le bitume et le mélange des huiles aromatiques, étant dispersé dans la phase continue, de façon à constituer des phases distinctes.

Après dispersion de ces deux phases hydrocarbonées, les fractions compatibilisantes viendront fluxer le bitume vieilli existant, tandis que les huiles aromatiques assureront un pontage entre ce liant ainsi régénéré et le liant d'apport, en phase continue après rupture.

### EXEMPLE 2 : Régénération d'une chaussée comportant une grande proportion de matériaux non liés et peu anguleux.

Le liant composite de régénération est formulé comme suit :
- 30 à 40% d'un bitume conforme à la norme T 65-001 en dispersion dans la phase continue;
- 50 à 30% de ciment dispersé dans l'eau;
- 0,5 à 2% d'un sel d'ammonium quaternaire dissous dans l'eau; et,
- 20,5 à 28% d'eau constituant la phase continue avec le sel d'ammonium quaternaire.

Le sel d'ammonium quaternaire assure la compatibilité de l'action des liants hydrocarbonés et du liant hydraulique.

La proportion des divers constituants de ce liant est ajustée en fonction des éléments suivants :
- Nature du matériau à traiter;
- Pourcentage de l'eau de refroidissement préalablement introduite, au niveau du rotor de fraisage, par une rampe distincte, ce pourcentage étant calculé de façon à obtenir une teneur en eau optimale pour le compactage;
- Proportion respective de cette eau d'ajout et du pourcentage de ciment permettant d'assurer la prise de ce dernier.

### EXEMPLE 3 : Régénération d'une chaussée comportant une grande proportion de matériaux non liés et des matériaux lies par un liant hydrocarboné vieilli.

Le liant composite de régénération est formulé comme suit :
- 25 à 35% d'un bitume conforme à la norme T 65-001 en phase dispersée;
- 3 à 5% d'un mélange d'huiles aromatiques d'origine pétrolière, en phase dispersée;
- 0,5 à 2% d'un mélange de chlorhydrate de polyamine grasse et d'un surfactif non-ionique polyoxyéthyléné dissous dans l'eau;
- 50 à 30% de ciment dispersé dans l'eau; et,
- 21,5 à 28% d'eau.

Les deux phases, bitume et huiles aromatiques, sont, comme dans l'exemple 1, dispersées dans la phase aqueuse indépendamment l'une de l'autre et se comportent de la même manière que dans cet exemple, vis-à-vis du liant hydrocarboné vieilli. Le mélange des surfactifs ayant, vis-à-vis des actions des deux liants, hydrocarboné et minéral, le même rôle que l'ammonium quaternaire de l'exemple n° 2, tandis que la même relation existe entre la prise du ciment et le dosage en eau d'ajout de fraisage

### EXEMPLE 4 : Régénération d'un enrobé bitumineux ancien

Le liant composite de régénération, ajouté en proportion de 1 à 3% du poids de matériau fraisé, est formulé comme suit :
- 50 à 65% d'un mélange constitué de 90 à 98% d'un bitume conforme à la Norme T 65-001 et de 2 à 10% d'un mélange d'huiles aromatiques d'origine pétrolière, ce mélange constituant une phase dispersée;
- 1 à 2% d'un mélange de surfactifs ioniques : sel alcalin d'acide résinique et de protéine animale en milieu aqueux; et,
- 49 à 33% d'eau.

## Revendications

1. Procédé pour régénérer à froid les matériaux récupérés d'une couche supérieure d'une chaussée, en vue de leur réutilisation, dans lequel on récupère mécaniquement lesdits matériaux et on les traite in situ par un liant composite, procédé caractérisé en ce que l'on opère de manière connue en soi le fraisage des couches supérieures du revêtement de la chaussée en ce que le liant composite est une émulsion aqueuse d'au moins un liant d'apport hydrocarboné, choisi parmi les bitumes et d'au moins un agent compatibilisant choisi parmi les huiles aromatiques d'origine pétrolière et/ou les liants hydrauliques.

2. Procédé selon la revendication 1, caractérisé par le fait qu'on amène le liant composite dans la zone de fraisage, et on mélange à froid ce liant avec le matériau fraisé à régénérer.

3. Procédé selon l'une des revendications 1 ou 2, caractérisé en ce que l'émulsion aqueuse comporte au moins un agent tensio-actif ionique ou non-ionique.

4. Procédé selon le revendication 3, caractérisé en ce que les agents tensio-actifs ioniques sont choisis parmi les sels alcalins des acides résiniques, les sels alcalins de protéines animales, les sels d'ammonium quaternaire et les chlorhydrates de polyamines grasses.

5. Procédé selon la revendication 3, caractérisé en ce que les agents tensio-actifs non-ioniques sont choisis parmi les composés polyoxyéthylénés.

6. Procédé selon l'une quelconque des revendications 1 à 5, caractérisé en ce que le liant d'apport hydrocarboné est choisi parmi les bitumes purs et les bitumes spéciaux, fluxés ou non.

7. Procédé selon l'une quelconque des revendications 1 à 6, caractérisé en ce que le liant hydraulique est du ciment.

## Claims

1. Process for cold regenerating materials recovered from an upper layer of a roadway for recycling, wherein said materials are recovered mechanically and treated in situ with a compound binder, characterized by the fact that the upper layers of the roadway platform are milled in a per se known way, the compound binder is an aqueous emulsion of at least one added hydrocarbon binder selected amongst bitumens and at least a compatibility agent selected amongst aromatic oils of petroleum stock and/or hydraulic binders.

2. Process according to claim 1, characterized by the fact that said binder is brought to the milling zone and cold mixed with the milled material to be regenerated.

3. Process according to any of claims 1 and 2, characterized by the fact that said aqueous emulsion comprises at least one ionic or non-ionic surface-active agent.

4. Process according to claim 3, characterized by the fact that the ionic surface-active agents are selected amongst alcaline salts of resinic acids, alcaline salts of animal proteines, quaternary ammonium salts and hydrochlorides of fat polyamines.

5. Process according to claim 3, characterized by the fact that the non-ionic surface-active agents are selected amongst polyoxyethylene compounds.

6. Process according to any of claims 1 to 5, characterized by the fact that the added hydrocarbon binder is selected amongst pure bitumens and special bitumens, fluxed or not.

7. Process according to any of claims 1 to 6, characterized by the fact that the hydraulic binder is cement.

## Patentansprüche

1. Verfahren zum Kaltregenerieren der zurückgewonnenen Materialien einer Fahrbahndeckschicht im Hinblick auf deren Wiederverwendung, wobei man die genannten Materialien mechanisch wiedergewinnt und diese in situ mit einem zusammengesetzten Bindemittel behandelt, dadurch gekennzeichnet, daß man in an sich bekannter Weise das Fräsen der Deckschicht des Fahrbahnmantels durchführt und daß das zusammengesetzte Bindemittel eine wässrige Emulsion aus wenigstens einem bituminösen Bindemittelanteil, ausgewählt aus den Bitumen und wenigstens einem kompatiblen Mittel, ausgewählt aus den aromatischen, von Mineralöl stammenden Ölen und/oder den hydraulischen Bindemitteln ist.

2. Verfahren nach Anspruch 1, dadurch gekennzeichnet, daß man das zusammengesetzte Bindemittel in die Fräszone leitet und das Bindemittel mit dem zu regenerierenden Fräsmaterial kalt vermischt.

3. Verfahren nach Anspruch 1 oder 2, dadurch gekennzeichnet, daß die wässrige Emulsion wenigstens ein oberflächen-aktives ionisches oder nicht-ionisches Mittel umfaßt.

4. Verfahren nach Anspruch 3, dadurch gekennzeichnet, daß die oberflächen-aktiven ionischen Mittel aus den alkalischen Salzen der Harzsäuren, den alkalischen Salzen der tierischen Proteine, den quaternären Ammoniumsalzen und den Chlorhydraten fetter Polyamine gewählt sind.

5. Verfahren nach Anspruch 3, dadurch gekennzeichnet, daß die oberflächen-aktiven nicht-ionischen Mittel aus den Polyoxyethylen-Verbindungen gewählt sind.

6. Verfahren nach einem der Ansprüche 1 bis 5, dadurch gekennzeichnet, daß der bituminöse Bindemittelanteil aus den reinen Bitumen und den Spezialbitumen, gefluxt oder nicht, gewählt sind.

7. Verfahren nach einem der Ansprüche 1 bis 6, dadurch gekennzeichnet, daß das hydraulische Bindemittel Zement ist.
